# EUROPÄISCHE PATENTSCHRIFT

(11) **EP 1 542 847 B1**
(45) Veröffentlichungstag und Bekanntmachung des Hinweises auf die Patenterteilung: **23.08.2006**
(21) Anmeldenummer: 03729766.0
(22) Anmeldetag: 23.06.2003
(51) Int. Cl.: B29C 45/14

(54) **VERFAHREN ZUR HERSTELLUNG EINES ERZEUGNISSES SOWIE NACH DIESEM VERFAHREN HERGESTELLTES ERZEUGNIS**
METHOD FOR PRODUCTION OF AN OBJECT AND OBJECT PRODUCED BY SAID METHOD
PROCEDE POUR FABRIQUER UN PRODUIT ET PRODUIT FABRIQUE SELON CE PROCEDE

(30) Priorität: 21.06.2002 CH 106802
(43) Veröffentlichungstag der Anmeldung: 22.06.2005
(73) Patentinhaber: Weidmann Plastics Technology AG, 8640 Rapperswil (CH); Karl Zitt GmbH & Co., 81379 München (DE)
(72) Erfinder: OBERACHER, Peter, 83607 Holzkirchen (DE); SPROTTE, Matthias, CH-8645 Jona (CH); EHRIG, Frank, CH-8645 Jona (CH)
(74) Vertreter: Groner, Manfred
(86) Internationale Anmeldenummer: PCT/CH2003/000404
(87) Internationale Veröffentlichungsnummer: WO 2004/000524

(56) Entgegenhaltungen:
- EP-A- 0 743 166
- PATENT ABSTRACTS OF JAPAN vol. 8, no. 83 (M-290), 17. April 1984 (1984-04-17) -& JP 59 001236 A (YOSHIDA KOGYO KK), 6. Januar 1984 (1984-01-06) -& DATABASE WPI Week 198407 Derwent Publications Ltd., London, GB; AN 1984-039586 XP002214459 & JP 59 001236 A
- PATENT ABSTRACTS OF JAPAN vol. 13, no. 251 (E-771), 12. Juni 1989 (1989-06-12) -& JP 01 050497 A (SATOOSEN:KK), 27. Februar 1989 (1989-02-27)
- PATENT ABSTRACTS OF JAPAN vol. 7, no. 244 (M-252), 28. Oktober 1983 (1983-10-28) -& JP 58 131047 A (TOUKAI RIKA DENKI SEISAKUSHO:KK), 4. August 1983 (1983-08-04)
- PATENT ABSTRACTS OF JAPAN vol. 14, no. 327 (M-998), 13. Juli 1990 (1990-07-13) -& JP 02 111512 A (DAINIPPON PRINTING CO LTD), 24. April 1990 (1990-04-24)

## Beschreibung

Die Erfindung betrifft ein Verfahren zur Herstellung eines Erzeugnisses mit einer ersten Schicht, die mit einer zweiten Schicht verbunden ist, wobei die erste Schicht plastisch verformbar ist und eine Vorderseite und eine Rückseite aufweist und das Verbinden der beiden Schichten in einer Spritzgussform erfolgt.

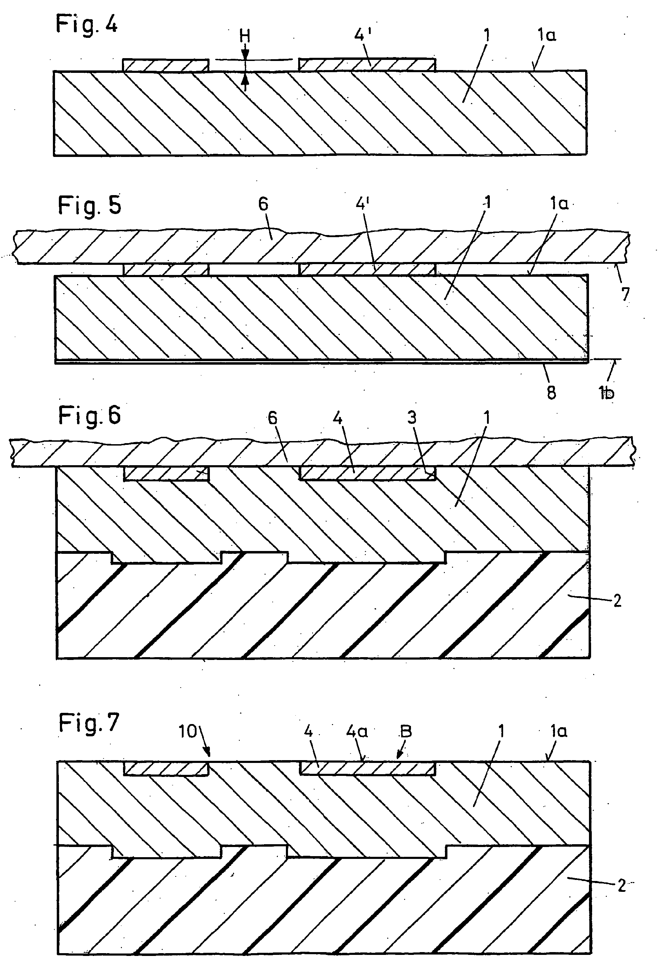

Die Patent Abstracts of Japan Bd. 8, Nr. 83 (M 290), 17. April 1984 und JP-A-59001236 offenbaren ein Verfahren zur Herstellung eines dreidimensionalen Musters. Hierbei wird eine AluminiumFolie bedruckt und nach dem Aushärten des Drucks wird diese Folie in einer Gussform hinterspritzt. Das Hinterspritzen erfolgt mit einem Harz (Resin), wobei der Spritzdruck im Vergleich zum Spritzdruck von Thermoplasten vergleichsweise gering ist. Die hinterspritzte Folie besteht deshalb hier aus weichem Aluminium. Hartes Aluminium oder Edelstahl könnten hier nicht verwendet werden. Beim Hinterspritzen wird die Farbe in die AluminiumFolie hineingepresst, die hierbei deformiert wird. Im nicht bedruckten Bereich wird die Folie nach aussen gedrückt und plastisch verformt. Auf der Sichtseite sind dadurch die nicht bedruckten Bereiche der Folie erhöht und ergeben durch nachträgliche unterschiedliche Schwindung am Bauteil eine dreidimensionale Struktur, wie in Fig. 5 gezeigt. Nachteilig ist bei diesem Verfahren, dass aufgrund des Hervortretens der nicht bedruckten Bereiche eine Wölbung des Teils kaum zu vermeiden ist. Die dreidimensionale Struktur ist abhängig von den verwendeten Materialien und dürfte schwierig zu reproduzieren sein. Eine definierte Masshaltigkeit dürfte sehr eingeschränkt sein. Damit die dreidimensionale Struktur erhalten wird, muss die Folie vergleichsweise weich und elastisch sein. Harte Folien, beispielsweise aus Stahl, können hier nicht verwendet werden.

Im Stand der Technik ist das Hinterspritzen von Folien im Spritzgussverfahren seit langem bekannt. Hierbei wird eine Folie, beispielsweise eine Metallfolie, in eine Spritzgussform eingelegt und mit thermoplastischem Kunststoff hinterspritzt. Es ist auch bekannt, die Vorderseite der Folie mit Vertiefungen zu versehen, wobei diese Vertiefungen beispielsweise eine Schrift oder ein Muster bilden. Dazu wird die Spritzgussform innenseitig korrespondierend zu den herzustellenden Vertiefungen auf der Folie strukturiert. Beim Hinterspritzen wird die Folie an die strukturierte Innenseite der Spritzgussform angepresst. Ein solches Verfahren ist beispielsweise für die Herstellung ein Einlegern in Einstiegsleisten bekannt. Diese Einleger sind somit auf ihrer Vorderseite jeweils mit Vertiefungen versehen, die einen optischen Tiefeneffekt ergeben. Die Vertiefungen bilden beispielsweise eine Schrift. Dieses Verfahren ermöglicht die Herstellung von solchen Erzeugnissen in grossen Serien und vergleichsweise kostengünstig.

Der Erfindung liegt die Aufgabe zugrunde, ein Verfahren der genannten Art zu schaffen, das noch weitere Möglichkeiten für die Gestaltung der Erzeugnisse bietet und das sich trotzdem für eine automatisierte Serienfertigung eignet. Mit dem Verfahren soll es somit möglich sein, die Vorderseite des Erzeugnisses möglichst vielseitig und ästetisch ansprechend zu gestalten.

Beim erfindungsgemässen Verfahren wird die erste Schicht auf ihrer Vorderseite partiell mit einem Auftrag versehen. Dieser Auftrag wird anschliessend ausgehärtet. Die erste Schicht mit dem ausgehärteten Auftrag wird in eine Spritzgussform eingebracht. In dieser Spritzgussform wird die erste Schicht beispielsweise hinterspritzt, wobei diese Schicht mit ihrer Vorderseite an eine Innenseite der Spritzgussform angepresst wird. Der ausgehärtete Auftrag formt hierbei die erste Schicht um und prägt diese. Vorzugsweise erfolgt das Einpressen des Auftrages in die erste Schicht so, dass in dieser eine Vertiefung gebildet wird. Die hinterspritzte Schicht wird schliesslich entformt. Durch die Wahl des Auftrages kann eine Vorderseite hergestellt werden, die strukturiert ist und/oder beispielsweise durch die Wahl eines farbigen Auftrages beliebig bunt gestaltet werden kann.

Vorzugsweise wird der Auftrag vollständig in die erste Schicht hineingepresst. Wird nach einer Weiterbildung der Erfindung der Auftrag aus einer lasierenden und/oder transparenten Farbe hergestellt, so ergibt sich ein besonderer optischer Effekt. Insbesondere lässt sich hierdurch ein besonders interessanter Tiefeneffekt erzielen. Dadurch werden die Flanken der Vertiefungen sichtbar.

Der Auftrag wird gemäss einer Weiterbildung der Erfindung mit einer Druckfarbe hergestellt. Vorzugsweise erfolgt dies mittels Siebdruck oder Tampondruck. In einfacher Weise können somit unterschiedliche Muster oder Schriften aufgebracht werden. Das Aushärten der Druckfarbe erfolgt vorzugsweise thermisch, durch UV-Strahlung oder durch Ablüften. Denkbar ist auch ein Aushärten durch eine chemische Reaktion, oder durch eine Kombination verschiedener Verfahren.

Die erste Schicht ist nach einer Weiterbildung der Erfindung eine Aluminium- oder Stahlfolie. Denkbar sind aber auch Folien beispielsweise aus Kupfer, Messing oder anderen geeigneten Metallen. Beim Hinterspritzen werden diese Folien durch den ausgehärteten Auftrag deformiert und im Fall des Spritzgiessens durch den Auftrag im Wesentlichen geprägt. Dadurch können sehr exakte Muster und auch Schriften hergestellt werden, die einen besonderen optischen Effekt ergeben können. Die Oberfläche kann an sich beliebig mehrfarbig gestaltet werden. Wesentlich ist, dass die genannten Verfahrensschritte automatisierbar sind. Das Verfahren eignet sich somit auch für eine Serienfertigung mit hohen Stückzahlen.

Die Erfindung betrifft zudem ein nach dem genannten Verfahren hergestelltes Erzeugnis. Das Erzeugnis ist dadurch gekennzeichnet, dass die Vorderseite der ersten Schicht partiell Vertiefungen aufweist, die Verformungen eines Auftrages sind. Der Auftrag ist vorzugsweise eine Druckfarbe. Vorzugsweise ist diese vertieft in der ersten Schicht angeordnet. Nach einer Weiterbildung der Erfindung ist der Auftrag eine halbtransparente bzw. lasierende Druckfarbe. Dadurch kann ein besonders interessanter Tiefeneffekt erzielt werden.

Nach einer bevorzugten Ausführung ist das Erzeugnis ein Zierteil insbesondere eine Zierleiste für ein Kraftfahrzeug. Eine solche kann nach dem erfindungsgemässen Verfahren besonders kostengünstig und in hohen Stückzahlen hergestellt werden. Dennoch ist die Einstiegsleiste dauerhaft und kann wie oben erwähnt mit einer besonderen Vorderseite gestaltet werden.

Weiter vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: ein Schnitt durch einen Teil eines erfindungsgemässen Erzeugnisses,
- Figur 2: eine Ansicht eines erfindungsgemässen Erzeugnisses,
- Figur 3: ein Schnitt durch einen Abschnitt eines erfindungsgemässen Erzeugnisses gemäss einer Variante und
- Figuren 4 bis 7: schematisch einzelne Schritte des erfindungsgemässen Verfahrens.

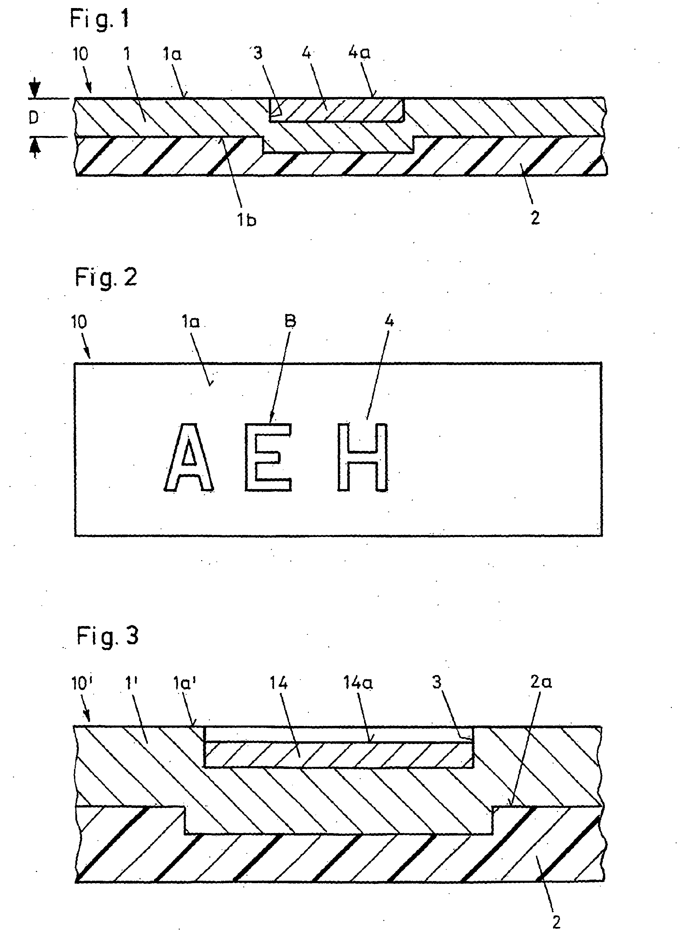

Die Figuren 1 und 2 zeigen eine Einstiegsleiste 10, die eine erste Schicht 1 mit einer Vorderseite 1a und einer Rückseite 1b sowie eine angespritzte zweite Schicht 2 aufweist. Die erste Schicht 1 ist vorzugsweise eine Aluminium- oder Stahlfolie. Die Folie 1 kann aber auch aus einem anderen geeigneten plastisch verformbaren Werkstoff, insbesondere Metall sein. Die Schicht 1 kann auch ein Verbund von mehreren Schichten sein, beispielsweise einer Metallschicht und einer Lackschicht. Beispielsweise kann die Folie 1 auch aus Kupfer oder Messing sein. Die Dicke D der ersten Schicht 1 ist vorzugsweise kleiner als etwa 0,5 mm. Vorzugsweise liegt die Dicke im Bereich von 0,1 bis 0,3 mm. Die zweite Schicht besteht aus einem Kunststoff, insbesondere einem thermoplastischen Kunststoff, der an die Rückseite 1b der ersten Schicht 1 im Spritzgussverfahren angespritzt ist. Zur besseren Haftung der zweiten Schicht 2 ist auf der Rückseite 1b vor dem Hinterspritzen mit einem an sich bekannten Haftvermittler 8 versehen.

Auf der Vorderseite 1a ist gemäss Figur 2 eine Darstellung B sichtbar, die beispielsweise ein Schriftzug oder ein an sich beliebiges Muster ist. Die Darstellung B erstreckt sich lediglich über einen Teilbereich der Vorderseite 1a. Sie wird durch einen Auftrag 4 gebildet, der in einer Vertiefung 3 der ersten Schicht 1 angeordnet ist. Wie die Figur 1 zeigt, befindet sich eine Oberseite 4a des Auftrages 4 in der Ebene der Vorderseite 1a. Dies ist jedoch nicht zwingend, wie das Ausführungsbeispiel 10' gemäss Figur 3 zeigt. Bei diesem weist ein Auftrag 14 eine Oberseite 14a auf, die sich unterhalb einer Vorderseite la' einer ersten Schicht 1' befindet. Grundsätzlich könnte die Oberseite 14a auch über der Vorderseite la' angeordnet sein. Zudem ist grundsätzlich denkbar, dass der Auftrag 4 bzw. 14 mehrschichtig ist.

Anhand der Figuren 4 bis 7 wird nachfolgend das Verfahren zur Herstellung eines Erzeugnisses 10 näher erläutert.

Zunächst wird eine erste Schicht 1, beispielsweise eine Aluminiumfolie in die vorgesehene Form geschnitten, was aber nicht zwingend ist, und auf ihrer Vorderseite la partiell mit einem Auftrag 4' der Dicke H versehen. Der Auftrag 4' wird beispielsweise durch Bedrucken mit einer Druckfarbe aufgetragen. Das Bedrucken kann auch mehrfarbig sein. Dies kann beispielsweise mit Siebdruck oder Tampondruck erfolgen. Der Auftrag 4' kann an sich eine beliebige Darstellung B, beispielsweise ein Schriftzug oder ein Muster sein, wie dies beispielsweise in Figur 2 dargestellt ist. Die Höhe H des Auftrages 4' über der Oberseite 1a liegt im Bereich von 2 bis 1000 Mikrometer, vorzugsweise im Bereich von 2 bis 100 Mikrometer. Eine besonders bevorzugte Höhe H beträgt etwa 4 bis 10 Mikrometer.

Nach dem Aufbringen des Auftrages 4' wird dieser ausgehärtet. Dies kann beispielsweise thermisch, mit UV-Strahlung oder durch Ablüften erfolgen. Das Aushärten erfolgt beispielsweise bei etwa 100°C, wobei diese Temperatur selbstverständlich abhängig ist von der Art des Auftrages 4'.

Nach dem Aushärten wird die erste Schicht 1 in die Spritzgussform 6 eingelegt. Dies erfolgt vorzugsweise in an sich bekannter Weise selbsttätig. Die Spritzgussform 6 weist eine Innenseite 7 auf, die vorzugsweise plan oder bombiert ist und an welche die erste Schicht 1 mit ihrer Vorderseite 1a anzulegen ist. Nach dem Schliessen der Spritzgussform 6 wird die erste Schicht 1 mit einer Schicht 2 hinterspritzt. Um die Haftung der hinterspritzten zweiten Schicht 2 zu verbessern, ist auf die Rückseite 1b der ersten Schicht 1 gemäss Figur 5 vorzugsweise ein Haftvermittler 8 aufgetragen. Haftvermittler 8, welche die Haftung von Kunststoff auf Metall, beispielsweise Aluminium verbessern, sind dem Fachmann an sich bekannt. Beim Hinterspritzen der ersten Schicht 1 wird diese mit ihrer Vorderseite 1a an die Innenseite 7 der Spritzgussform 6 mit vergleichsweise hohem Druck und innerhalb eines sehr kurzen Zeitintervalles angepresst. Der Druck beträgt beispielsweise 600 bar. Beim Anpressen der ersten Schicht an die Innenseite 7 prägt der Auftrag 4' die erste Schicht 1. Durch die Prägung bzw. Deformation der ersten Schicht 1 entstehen in der ersten Schicht 1 entsprechende Vertiefungen 3, die korrespondierend zum Auftrag 4' ausgebildet sind. Versuche haben nun überraschend gezeigt, dass die Vertiefungen 3 vergleichsweise scharfkantig sind, die Vertiefungen 3 entsprechen somit dem Auftrag 4'. Die Vertiefungen 3 sind nach dem Hinterspritzen mit einem Auftrag 4 ausgefüllt, was jedoch nicht zwingend ist. Beim Einpressen wird der Auftrag 4' nur unwesentlich deformiert. Die Schicht 1 wird auf ihrer Rückseite ausgebuchtet, wie beispielsweise die Figur 1 erkennen lässt.

Nach dem Hinterspritzen wird in an sich bekannter Weise abgekühlt und entformt. Es liegt nun das in Figur 7 gezeigt Erzeugnis 10 vor. Dieses besteht aus einem Verbund der ersten Schicht 1 und der zweiten Schicht 2, die fest miteinander verbunden sind. Die Oberseite 1a ist mit einem Bild oder einer sonstigen Darstellung versehen, das bzw. die durch den in die erste Schicht 1 eingepressten Auftrag 4 gebildet wird. Die Aussenseite 4a ist bei diesem Ausführungsbeispiel bündig mit der Vorderseite 14a. Auf die Vorderseite 1a kann eine Schutzschicht, beispielsweise ein Lack aufgetragen werden, welcher auch die Vorderseite 4a des Auftrages 4 abdeckt. Die Vorderseite 14a kann jedoch auch überstehend oder versenkt sein, wie die Figur 3 zeigt. Um das Erzeugnis gemäss Figur 3 herzustellen, wird der Auftrag 14 mehrschichtig gebildet. Eine äussere Schicht wird nach dem Hinterspritzen entfernt, beispielsweise mit einem Lösungsmittel herausgelöst. Grundsätzlich kann auch der gesamte Auftrag 4 bzw. 14 entfernt, insbesondere aus der Vertiefung 3 bzw. 3' herausgelöst werden. In diesem Fall ist dann die Vorderseite 1a bzw. la' mit Vertiefungen 3 bzw. 3' strukturiert. Denkbar ist auch eine Ausführung, bei welcher ein Teil der Vertiefungen leer und ein anderer Teil mit einem Auftrag 4 bzw. 14 gefüllt ist.

Der Auftrag 4 bzw. 14 kann lasierend bzw. durchscheinend, halbtransparent oder deckend sein. Dies ergibt eine Vorderseite la bzw. la', die visuell als strukturierte Fläche mit einem Tiefeneffekt erscheint. Da der Auftrag 4 bzw. 4' mehrfarbig sein kann, ergeben sich zahlreiche Möglichkeiten für die Gestaltung der Vorderseite 1a. Da das Bedrucken einer Oberseite als auch das Hinterspritzen im Spritzgussverfahren kostengünstig und automatisierbar sind, sind auch Serien mit hohen Stückzahlen möglich.

Das Erzeugnis 10 ist insbesondere ein Zierteil insbesondere eine Zierleiste für ein Personenfahrzeug. Das Erzeugnis 10 bzw. 10' kann aber auch ein anderer Gegenstand, beispielsweise ein Abdeckschild, ein Türschild, ein Gehäuse eines Gerätes, beispielsweise einer sanitären Armatur, ein Verbindungsteil, eine Abdeckleiste usw. sein. Das Erzeugnis 10 bzw. 10' ist in der Regel flächig, dies ist jedoch nicht zwingend.

## Patentansprüche

1. Verfahren zur Herstellung eines Erzeugnisses (10, 10') mit einer ersten Schicht (1), die mit einer zweiten Schicht (2) verbunden ist, wobei die erste Schicht plastisch verformbar ist und eine Vorderseite (1a) und eine Rückseite (1b) aufweist und das Verbinden der beiden Schichten (1, 2) in einer Spritzgussform erfolgt, mit folgenden Verfahrensschritten:
a) die erste Schicht (1) wird auf ihrer Vorderseite (1a) mit einem Auftrag (4') versehen,
b) der Auftrag (4') wird ausgehärtet,
c) die erste Schicht (1) wird in die Spritzgussform (6) eingelegt,
d) die erste Schicht (1) wird mit ihrer Vorderseite (1a) an eine Innenseite (7) der Spritzgussform (6) angepresst, wobei der ausgehärtete Auftrag (4') die erste Schicht (1) umformt und wenigstens teilweise in die erste Schicht (1) geprägt wird,
e) das Produkt (10, 1d) wird entformt, **dadurch gekennzeichnet, dass** der Auftrag (4') wenigstens teilweise transparent oder lasierend ist und dass das Produkt aufgrund des wenigstens teilweise transparenten oder lasierenden Auftrags (4') auf der Vorderseite eine optische Tiefenwirkung zeigt.

2. Verfahren nach Anspruch 1, **dadurch gekennzeichnet, dass** der Auftrag (4') im Wesentlichen vollständig in die erste Schicht (1) geprägt wird und in dieser eine oder mehrere Vertiefungen (3) bildet.

3. Verfahren nach Anspruch 1 oder 2, **dadurch gekennzeichnet, dass** die erste Schicht (1) in der Spritzgussform (6) hinterspritzt und hierbei die zweite Schicht (2) gebildet wird.

4. Verfahren nach einem der Ansprüche 1 bis 3, **dadurch gekennzeichnet, dass** die erste Schicht (1) mit einem thermoplastischen Kunststoff hinterspritzt wird.

5. Verfahren nach einem der Ansprüche 1 bis 4, **dadurch gekennzeichnet, dass** die erste Schicht (1) auf ihrer Rückseite (1b) vor dem Hinterspritzen mit einem Haftvermittler (8) versehen wird.

6. Verfahren nach einem der Ansprüche 1 bis 5, **dadurch gekennzeichnet, dass** die erste Schicht (1) eine Metallfolie, insbesondere eine Aluminium- oder Stahlfolie ist.

7. Verfahren nach einem der Ansprüche 1 bis 6, **dadurch gekennzeichnet, dass** die Dicke (D) der ersten Schicht (1) 0,5 mm oder weniger, vorzugsweise 0,1 mm oder weniger beträgt.

8. Verfahren nach einem der Ansprüche 1 bis 6, **dadurch gekennzeichnet, dass** die Dicke (D) der ersten Schicht (1) 0,1 bis 0,3 mm beträgt.

9. Verfahren nach einem der Ansprüche 1 bis 8, **dadurch gekennzeichnet, dass** der Auftrag (4') eine Dicke (H) von 2 bis 1000 Mikrometer, vorzugsweise 2 bis 100 Mikrometer aufweist.

10. Verfahren nach einem der Ansprüche 1 bis 9, **dadurch gekennzeichnet, dass** die Dicke (H) des Auftrages (4') 4 bis 10 Mikrometer beträgt.

11. Verfahren nach einem der Ansprüche 1 bis 10, **dadurch gekennzeichnet, dass** der Auftrag (4') ein Aufdruck ist.

12. Verfahren nach einem der Ansprüche 1 bis 11, **dadurch gekennzeichnet, dass** der Auftrag (4') aus einer oder mehreren Druckfarben hergestellt wird.

13. Verfahren nach Anspruch 12, **dadurch gekennzeichnet, dass** die Druckfarbe wenigstens teilweise durchscheinend, lasierend oder halbtransparent ist.

14. Verfahren nach einem der Ansprüche 1 bis 13, **dadurch gekennzeichnet, dass** der Auftrag (4') mit Siebdruck oder Tampondruck aufgebracht wird.

15. Verfahren nach einem der Ansprüche 1 bis 14, **dadurch gekennzeichnet, dass** der Auftrag (4') thermisch, mit UV-Strahlung, chemisch oder durch Ablüften ausgehärtet wird.

16. Verfahren nach Anspruch 15, **dadurch gekennzeichnet, dass** der Auftrag (4') bei 70 bis 100°C vorzugsweise etwa 80° ausgehärtet wird.

17. Verfahren nach einem der Ansprüche 1 bis 16, **dadurch gekennzeichnet, dass** der Auftrag (4') mehrschichtig ist.

18. Verfahren nach einem der Ansprüche 1 bis 17, **dadurch gekennzeichnet, dass** der Auftrag (4) wenigstens teilweise entfernt, vorzugsweise weggelöst oder abgezogen wird.

19. Verfahren nach einem der Ansprüche 1 bis 18, **dadurch gekennzeichnet, dass** ein Zierteil oder eine Zierleiste für ein Kraftfahrzeug hergestellt wird.

20. Erzeugnis, hergestellt nach dem Verfahren gemäss einem der Ansprüche 1 bis 19, **dadurch gekennzeichnet, dass** die Vorderseite (1a) der ersten Schicht (1) partiell eine Vertiefung bzw. Vertiefungen (3) aufweist, die Verformungen und insbesondere Prägungen durch einen partiellen Auftrag (4) sind, wobei der Auftrag (4) wenigstens teilweise transparent oder lasierend ist.

21. Erzeugnis nach Anspruch 20, **dadurch gekennzeichnet, dass** die Vertiefung bzw. Vertiefungen (3) vollständig oder teilweise mit einer Druckfarbe ausgefüllt sind.

22. Erzeugnis nach Anspruch 20 oder 21, **dadurch gekennzeichnet, dass** der Auftrag (4) eine Oberseite (4a) aufweist, die tiefer angeordnet ist als die Vorderseite (1a) der ersten Schicht (1).

23. Erzeugnis nach einem der Ansprüche 20 bis 22, **dadurch gekennzeichnet, dass** der Auftrag (4) eine Druckfarbe ist.

24. Erzeugnis nach einem der Ansprüche 20 bis 23, **dadurch gekennzeichnet, dass** die erste Schicht (1) eine Metallfolie ist und eine Dicke (D) aufweist, die kleiner als 0,5 mm, vorzugsweise 0,1 bis 0,3 mm aufweist.

25. Erzeugnis nach einem der Ansprüche 20 bis 24, **dadurch gekennzeichnet, dass** es ein Zierteil oder eine Zierleiste für ein Kraftfahrzeug ist.

26. Erzeugnis nach einem der Ansprüche 20 bis 25, **dadurch gekennzeichnet, dass** die zweite Schicht (2) ein Spritzgussteil ist.

## Claims

1. A method for production of an object (10, 10') with a first layer (1), which is bonded to a second layer (2), the first layer being plastically deformable and having a front side (1a) and a rear side (1b), and the bonding of the two first layer (1, 2) taking place in an injection mold, with the following method steps:
a) the first layer (1) is partially provided with an at least partially transparent coating (4') on its front side (1a),
b) the coating (4') is cured,
c) the first layer (1) is inserted into an injection mold (6),
d) the first layer (1) is pressed with its front side (1a) against an inner side (7) of the injection mold (6), the cured coating (4') changing the form of the first layer (1) and at least partially creating an impression in the first layer (1),
e) the product (10, 1d) is demolded, said product exhibiting an optical effect of depth on the front side on account of the transparent coating (4').

2. The method as claimed in claim 1, **characterized in that** the coating (4') is impressed substantially completely into the first layer (1) and forms one or more depressions (3) in the latter (4').

3. The method as claimed in claim 1 or 2, **characterized in that** the first layer (1) is laminated in the injection mold (6) by injecting plastic behind it and the second layer (2) is thereby formed.

4. The method as claimed in one of claims 1 to 3, **characterized in that** a thermoplastic is injected behind the first layer (1).

5. The method as claimed in one of claims 1 to 4, **characterized in that** the first layer (1) is provided with an adhesion promoter (8) on its rear side (1b) before the in-mold lamination.

6. The method as claimed in one of claims 1 to 5, **characterized in that** the first layer (1) is a metal foil, in particular an aluminum foil or steel foil.

7. The method as claimed in one of claims 1 to 7, **characterized in that** the thickness (D) of the first layer (1) is 0.5 mm or less, preferably 0.1 mm or less.

8. The method as claimed in one of claims 1 to 6, **characterized in that** the thickness (D) of the first layer (1) is 0.1 to 0.3 mm.

9. The method as claimed in one of claims 1 to 8, **characterized in that** the coating (4') has a thickness (H) of from 2 to 1000 micrometers, preferably 2 to 100 micrometers.

10. The method as claimed in one of claims 1 to 9, **characterized in that** the thickness (H) of the coating (4') is 4 to 10 micrometers.

11. The method as claimed in one of claims 1 to 10, **characterized in that** the coating (4') is an imprint.

12. The method as claimed in one of claims 1 to 11, **characterized in that** the coating (4') is produced from one or more printing inks.

13. The method as claimed in claim 12, **characterized in that** the printing ink is at least partially transparent.

14. The method as claimed in one of claims 1 to 13, **characterized in that** the coating (4') is applied by screen printing or pad printing.

15. The method as claimed in one of claims 1 to 14, **characterized in that** the coating (4') is cured thermally, with UV radiation, chemically or by exposure to air.

16. The method as claimed in claim 15, **characterized in that** the imprint (4') is cured at 70 to 100°C, preferably approximately 80°.

17. The method as claimed in one of claims 1 to 16, **characterized in that** the coating (4') comprises more than one layer.

18. The method as claimed in one of claims 1 to 18, **characterized in that** the coating (4) is at least partially removed, preferably dissolved away or pulled off.

19. The method as claimed in one of claims 1 to 18, **characterized in that** a decorative part or a trim molding for a motor vehicle is produced.

20. An object, produced by the method as claimed in claim 1, **characterized in that** the front side (1a) of the first layer (1) partially has a depression or depressions (3), which are deformations and in particular impressions created by a partial coating (4), the coating (4) being transparent.

21. The object as claimed in claim 20, **characterized in that** the depression or depressions (3) are completely or partially filled with a printing ink.

22. The object as claimed in claim 20 or 21, **characterized in that** the coating (4) has an upper side (4a) which is arranged deeper than the front side (1a) of the first layer (1).

23. The object as claimed in one of claims 20 to 22, **characterized in that** the coating (4) is a printing ink.

24. The object as claimed in one of claims 20 to 23, **characterized in that** the first layer (1) is a metal foil and has a thickness (D) which is less than 0.5 mm, preferably 0.1 to 0.3 mm.

25. The object as claimed in one of claims 20 to 24, **characterized in that** it is a decorative part or a trim molding for a motor vehicle.

26. The object as claimed in one of claims 20 to 25, **characterized in that** the second layer (2) is an injection-molded part.

## Revendications

1. Procédé de fabrication d'un produit (10, 10') comprenant une première couche (1) qui est connectée à une deuxième couche (2), la première couche étant déformable plastiquement et présentant une face avant (1a) et une face arrière (1b) et la connexion des deux couches (1, 2) s'effectuant dans un moule de moulage par injection, comprenant les étapes de procédé suivantes :
a) la première couche (1) est munie d'un enduit (4') sur sa face avant (1a),
b) l'enduit (4') est durci,
c) la première couche (1) est introduite dans le moule de moulage par injection (6),
d) la première couche (1) est pressée avec sa face avant (1a) contre une face intérieure (7) du moule de moulage par injection (6), l'enduit durci (4') déformant la première couche (1) et étant imprimé au moins en partie dans la première couche (1),
e) le produit (10, 1d) est démoulé, **caractérisé en ce que** l'enduit (4') est au moins partiellement transparent ou translucide et **en ce que** le produit, du fait de l'enduit (4') au moins partiellement transparent ou translucide, présente un effet de profondeur optique sur la face avant.

2. Procédé selon la revendication 1, **caractérisé en ce que** l'enduit (4') est substantiellement complètement imprimé dans la première couche (1) et forme dans celle-ci un ou plusieurs renfoncements (3).

3. Procédé selon la revendication 1 ou 2, **caractérisé en ce que** la première couche (1) est revêtue par injection par l'arrière dans le moule de moulage par injection (6) et de ce fait la deuxième couche (2) est formée.

4. Procédé selon l'une quelconque des revendications 1 à 3, **caractérisé en ce que** la première couche (1) est revêtue par injection par l'arrière avec un plastique thermoplastique.

5. Procédé selon l'une quelconque des revendications 1 à 4, **caractérisé en ce que** la première couche (1) est munie sur sa face arrière (1b), avant l'injection par l'arrière, d'un promoteur d'adhésion (8).

6. Procédé selon l'une quelconque des revendications 1 à 5, **caractérisé en ce que** la première couche (1) est une feuille métallique, notamment une feuille d'aluminium ou d'acier.

7. Procédé selon l'une quelconque des revendications 1 à 6, **caractérisé en ce que** l'épaisseur (D) de la première couche (1) vaut 0,5 mm ou moins, de préférence 0,1 mm ou moins.

8. Procédé selon l'une quelconque des revendications 1 à 6, **caractérisé en ce que** l'épaisseur (D) de la première couche (1) vaut 0,1 à 0,3 mm.

9. Procédé selon l'une quelconque des revendications 1 à 8, **caractérisé en ce que** l'enduit (4') présente une épaisseur (H) de 2 à 1000 microns, de préférence de 2 à 100 microns.

10. Procédé selon l'une quelconque des revendications 1 à 9, **caractérisé en ce que** l'épaisseur (H) de l'enduit (4') vaut de 4 à 10 microns.

11. Procédé selon l'une quelconque des revendications 1 à 10, **caractérisé en ce que** l'enduit (4') est une surface imprimée.

12. Procédé selon l'une quelconque des revendications 1 à 11, **caractérisé en ce que** l'enduit (4') est fabriqué à partir d'une ou de plusieurs couleurs d'impression.

13. Procédé selon la revendication 12, **caractérisé en ce que** la couleur d'impression est au moins partiellement transparente, translucide ou semi-transparente.

14. Procédé selon l'une quelconque des revendications 1 à 13, **caractérisé en ce que** l'enduit (4') est appliqué par sérigraphie ou par impression au tampon.

15. Procédé selon l'une quelconque des revendications 1 à 14, **caractérisé en ce que** l'enduit (4') est durci thermiquement, par rayonnement UV, chimiquement ou par ventilation.

16. Procédé selon la revendication 15, **caractérisé en ce que** l'enduit (4') est durci à 70 à 100°C, de préférence à environ 80°C.

17. Procédé selon l'une quelconque des revendications 1 à 16, **caractérisé en ce que** l'enduit (4') est multicouche.

18. Procédé selon l'une quelconque des revendications 1 à 17, **caractérisé en ce que** l'enduit (4) est au moins partiellement enlevé, de préférence par décollement ou par pelage.

19. Procédé selon l'une quelconque des revendications 1 à 18, **caractérisé en ce qu'**un article décoratif ou une baguette décorative est produit(e) pour un véhicule automobile.

20. Produit, fabriqué selon le procédé selon l'une quelconque des revendications 1 à 19, **caractérisé en ce que** la face avant (1a) de la première couche (1) présente en partie un renfoncement ou des renfoncements (3), qui sont des déformations et notamment des impressions par un enduit partiel (4), l'enduit (4) étant au moins partiellement transparent ou translucide.

21. Produit selon la revendication 20, **caractérisé en ce que** le renfoncement ou les renfoncements (3) sont complètement ou partiellement remplis par une couleur d'impression.

22. Produit selon la revendication 20 ou 21, **caractérisé en ce que** l'enduit (4) présente une face supérieure (4a) qui est disposée plus profondément que la face avant (1a) de la première couche (1).

23. Produit selon l'une quelconque des revendications 20 à 22, **caractérisé en ce que** l'enduit (4) est une couleur d'impression.

24. Produit selon l'une quelconque des revendications 20 à 23, **caractérisé en ce que** la première couche (1) est une feuille métallique et présente une épaisseur (D), qui est inférieure à 0,5 mm, de préférence qui est de 0,1 à 0,3 mm d'épaisseur.

25. Produit selon l'une quelconque des revendications 20 à 24, **caractérisé en ce qu'**il s'agit d'un article décoratif ou d'une baguette décorative pour un véhicule automobile.

26. Produit selon l'une quelconque des revendications 20 à 25, **caractérisé en ce que** la deuxième couche (2) est une partie moulée par injection.
